# EUROPÄISCHE PATENTANMELDUNG

(11) **EP 2 995 845 A1**
(43) Veröffentlichungstag der Anmeldung: **16.03.2016**
(21) Anmeldenummer: 14184528.9
(22) Anmeldetag: 12.09.2014
(51) Int. Cl.: F16N 3/12

(54) **Fettpresse**

(71) Anmelder: Maser, Frank, 33334 Gütersloh (DE)
(72) Erfinder: Maser, Frank, 33334 Gütersloh (DE)
(74) Vertreter: Ter Meer Steinmeister & Partner

(57) **Zusammenfassung**

Fettpresse mit einem Pressenkopf (12), einem lösbar an den Pressenkopf angekuppelten Pressenrohr (14), einem an dem Pressenkopf ausgebildeten Anschluss für eine in dem Pressenrohr (14) aufgenommene Kartusche (18), und einem am Pressenrohr (14) im Bereich seines hinteren, vom Pressenkopf (12) abgewandten Endes ausgebildeten Anschlag (28) zur Abstützung der Kartusche (18), dadurch gekennzeichnet, dass zwischen dem Anschlag (28) und dem hinteren Ende der Kartusche (18) eine Feder (30) angeordnet ist, die die Kartusche gegen den Pressenkopf (12) vorspannt.

## Beschreibung

Die Erfindung betrifft eine Fettpresse mit einem Pressenkopf, einem lösbar an den Pressenkopf angekuppelten Pressenrohr, einem an dem Pressenkopf ausgebildeten Anschluss für eine in dem Pressenrohr aufgenommene Kartusche, und einem am Pressenrohr im Bereich seines hinteren, vom Pressenkopf abgewandten Endes ausgebildeten Anschlag zur Abstützung der Kartusche.

Eine Handhebelfettpresse dieser Art wird in FR 1 301 773 beschrieben. Der Pressenkopf enthält eine selbstansaugende Hochdruck-Kolbenpumpe, deren Kolben so mit einem Handhebel verbunden ist, dass Fett unter hohem Druck durch eine Abgabeöffnung ausgepresst wird, wenn der Handhebel gegen das Pressenrohr geschwenkt wird. Bei einem Rückwärtshub des Kolbens, wenn der Handhebel vom Pressenrohr weg geschwenkt wird, wird neues Fett aus der Kartusche angesaugt. Die Kartusche weist ein rohrförmiges, am hinteren Ende offenes Gehäuse auf, in dem ein Folgekolben geführt ist, der das Fett in der Kartusche einschließt und sich mit zunehmender Entleerung der Kartusche aufgrund des vom Pressenkopf erzeugten Soges in Richtung auf den Pressenkopf verschiebt. Am Pressenrohr ist im hinteren Bereich ein Anschlag in der Form einer Sicke gebildet, an der sich die Kartusche unmittelbar abstützt. Die Position dieses Anschlags ist so gewählt, dass er die Kartusche in einer Position hält, in der sie dicht am Pressenkopf anliegt.

Aufgabe der Erfindung ist es, eine vielseitiger einsetzbare Fettpresse zu schaffen.

Diese Aufgabe wird dadurch gelöst, dass zwischen dem Anschlag und dem hinteren Ende der Kartusche eine Feder angeordnet ist, die die Kartusche gegen den Pressenkopf vorspannt.

Diese Lösung hat den Vorteil, dass Kartuschen mit unterschiedlicher Länge verwendet werden können und dennoch gewährleistet ist, dass die Kartusche dicht am Pressenkopf anliegt.

Vorteilhafte Ausgestaltungen und Weiterbildungen der Erfindung sind in den Unteransprüchen angegeben.

Gemäß einer vorteilhaften Ausführungsform weist die Fettpresse eine Kolbenstange und einen presseneigenen Folgekolben auf, so dass sie auch ohne Kartusche benutzbar ist. In einer Ausführungsform ist die Kolbenstange demontierbar, so dass sie nicht im Wege ist, wenn mit Kartusche gearbeitet wird. In einer anderen Ausführungsform ist die Kolbenstange an einem Ende zugespitzt, so dass der Folgekolben der Kartusche mit der Kolbenstange durchstochen werden kann. In diesem Fall lässt sich der Folgekolben der Kartusche auch dann durchstechen und danach auf der Kolbenstange verschieben, wenn in dem Folgekolben der Kartusche keine vorperforierte Sollbruchstelle vorhanden ist.

Im folgenden werden Ausführungsbeispiele anhand der Zeichnung näher erläutert.

Es zeigen:
- Fig. 1: eine Gesamtansicht einer erfindungsgemäßen Fettpresse;
- Fig. 2: eine Ansicht der Fettpresse nach Fig. 1 in einer geänderten Konfiguration;
- Fig. 3: einen vergrößerten axialen Schnitt durch die Fettpresse in der Konfiguration nach Fig. 1 im Bereich eines Pressenkopfes;
- Fig. 4: einen Schnitt analog zu Fig. 3, für die Konfiguration der Fettpresse nach Fig. 2;
- Fig. 5: eine Gesamtansicht einer Fettpresse gemäß einem abgewandelten Ausführungsbeispiel; und
- Fig. 6: einen vergrößerten axialen Schnitt durch die Fettpresse nach Fig. 5 im Bereich des Pressenkopfes.

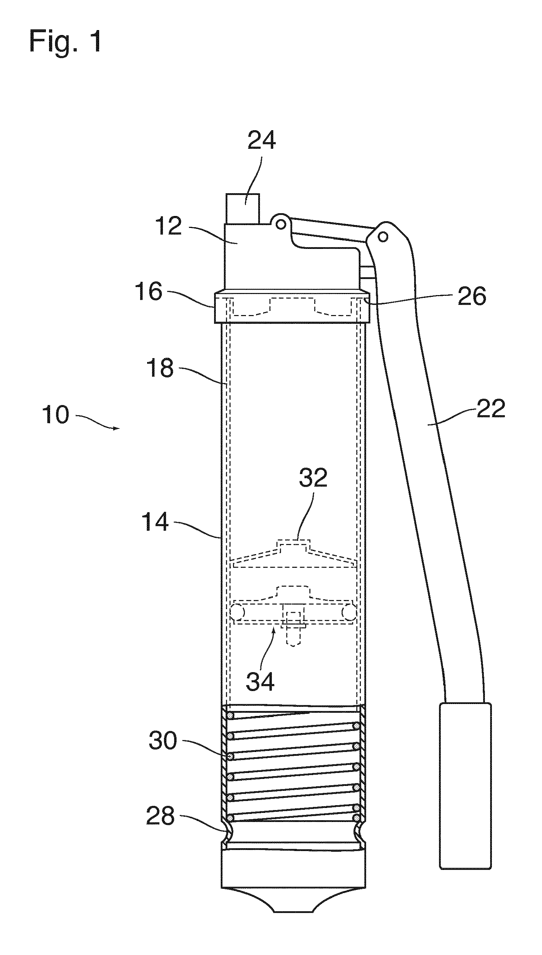

Die in Fig. 1 gezeigte Fettpresse 10 weist einen Pressenkopf 12 auf, an den ein Pressenrohr 14 beispielsweise mittels einer Verschraubung 16 lösbar angekuppelt ist. In dem Pressenrohr 14 ist eine Kartusche 18 aufgenommen, die einen gewissen Vorrat an Fett enthält.

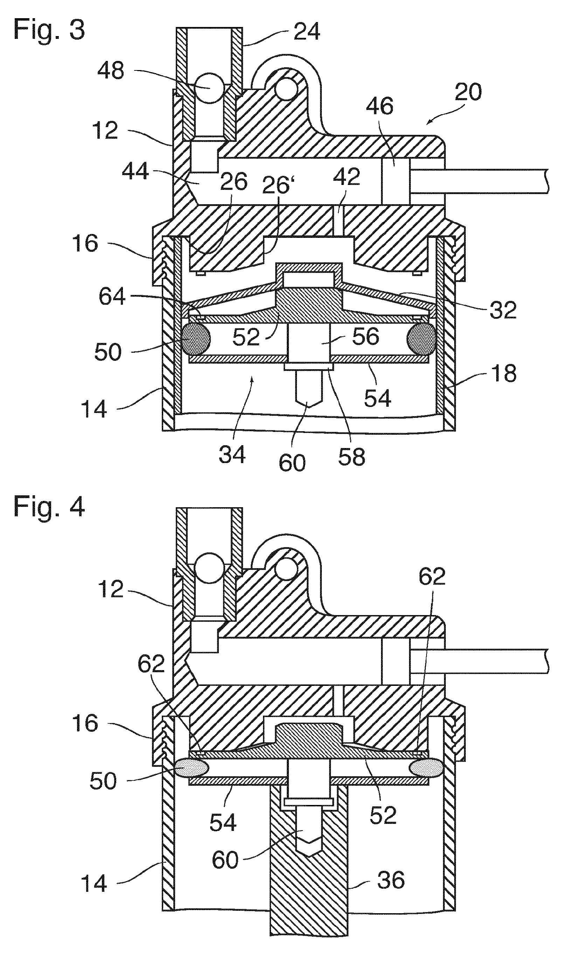

Der Pressenkopf 12 nimmt in bekannter Weise eine selbstansaugende Hochdruck-Kolbenpumpe 20 (Fig. 3) auf, die mit Hilfe eines Handhebels 22 betätigbar ist. Wenn der Handhebel 22 aus der in Fig. 1 gezeigten Stellung heraus vom Pressenrohr 14 weg geschwenkt wird, so wird Fett aus der Kartusche 18 angesaugt, und wenn der Handhebel anschließend wieder gegen das Pressenrohr geschwenkt wird, so wird das angesaugte Fett unter hohem Druck durch einen Auslass 24 der Fettpresse ausgepresst.

Die Kartusche 18 weist ein rohrförmiges, am vorderen und am hinteren Ende offenes, rohrförmiges Gehäuse aus Kunststoff auf das mit seinem vorderen Ende dicht an einer planen Dichtfläche 26 des Pressenkopfes 12 anliegt.

Das Pressenrohr 14 weist im Bereich seines hinteren Endes eine umlaufende Sicke auf, die einen Anschlag 28 für eine Feder 30 bildet, in diesem Beispiel eine an den Enden plangeschliffene Schraubenfeder. Die Feder 30 stützt sich an dem Anschlag 28 ab und liegt mit ihrem Umfang nahezu spielfrei an der Innenfläche des Pressenrohres 14 an. Ihr vorderes Ende drückt auf das offene hintere Ende der Kartusche 18, so dass diese mit ihrem vorderen Ende mit einer gewissen Kraft gegen die Dichtfläche 26 gespannt wird und dadurch an dieser Dichtfläche abdichtet und somit eine dichte Verbindung zwischen dem Inneren der Kartusche und der Kolbenpumpe 20 hergestellt wird.

Wenn die Kartusche 18 gewechselt werden soll, wird das Pressenrohr 14 vom Pressenkopf 12 abgeschraubt, und die Kartusche 18 lässt sich dann einfach abziehen und durch eine volle neue Kartusche ersetzen. Wenn anschließend das Pressenrohr 14 aufgeschoben und festgeschraubt wird, wird automatisch eine wieder dichte Verbindung zwischen der Kartusche und der Kolbenpumpe 20 hergestellt, und zwar auch dann, wenn sich die neue Kartusche in ihrer Läge von der alten Kartusche unterscheidet. Auf diese weise lässt sich die erfindungsgemäße Fettpresse mit Kartuschen unterschiedlicher Fabrikate verwenden.

Die Kartusche 18 weist im gezeigten Beispiel einen Folgekolben 32 auf, der durch einen Teller aus Kunststoff gebildet wird und verschiebbar in dem rohrförmigen Teil der Kartusche 18 geführt ist. Es sind Kartuschen bekannt, die im Auslieferungszustand am vorderen Ende durch einen lösbaren Deckel verschlossen sind und am hinteren Ende einen Multifunktionsdeckel aufweisen, der durch ein umlaufendes abreißbares Halteband am Gehäuse gehalten ist. Nach dem Abreißen des Haltebandes lässt sich der Multifunktionsdeckel als Folgekolben 32 verwenden.

Der Fettvorrat in der Kartusche füllt nach den Entfernen des vorderen Deckel den Raum zwischen der Dichtfläche 26 und dem Folgekolben 32 im wesentlichen vollständig aus. Wenn durch die Wirkung der selbstansaugenden Kolbenpumpe Fett aus der Kartusche 18 abgesaugt wird, so verschiebt sich der Folgekolben 32 aufgrund des von außen wirkenden Luftdruckes selbsttätig in Richtung Pressenkopf.

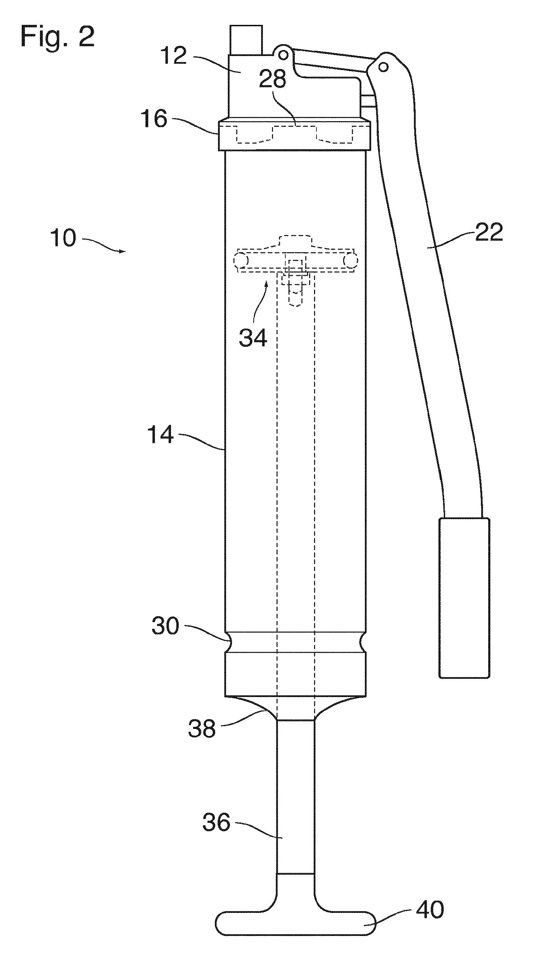

In Fig. 1 ist außerdem noch ein presseneigener Folgekolben 34 erkennbar, der eine andere Benutzungsweise der Fettpresse 10 ermöglicht, wie nachstehend anhand der Fig. 2 erläutert werden soll.

In Fig. 2 wird die Fettpresse 10 ohne die Kartusche 18 benutzt. Der presseneigene Folgekolben 34 ist lösbar am Ende einer Kolbenstange 36 befestigt, die koaxial durch das Innere des Pressenrohres 14 verläuft und in einer Endkappe 38 am hinteren Ende des Pressenrohres verschiebbar geführt ist. Auf dem außerhalb des Pressenrohres 14 liegenden Ende der Kolbenstange 36 ist ein lösbar aufgeschraubter Handgriff 40 angebracht.

Um die Fettpresse in der in Fig. 2 gezeigten Konfiguration mit Fett zu befüllen, wird das Pressenrohr 14 vom Pressenkopf 12 abgeschraubt, der Folgekolben 34 wird mit Hilfe des Handgriffes 40 in die hintere Endlage zurückgezogen, und das Fett wird beispielsweise in einer Aufreißpackung in das Pressenrohr 14 eingefüllt. Anschließend wird der Pressenkopf 12 wieder aufgeschraubt, so dass das Fett durch die Kolbenpumpe 20 angesaugt werden kann. Zwischen der Endkappe 38 und dem Folgekolben 34 kann eine nicht gezeigte Schraubenfeder vorgesehen sein, die den Folgekolben 34 etwas in Richtung auf den Pressenkopf 12 vorspannt, so dass das Nachschieben des Folgekolbens bei zunehmender Entleerung der Fettpresse unterstützt wird.

Der presseneigene Folgekolben 34 weist eine elastische Dichtung auf, deren Außendurchmesser verstellbar ist, wie später noch näher erläutert werden wird. Auf diese Weise lässt sich der Folgekolben 34 so einstellen, dass er wahlweise an der Innenfläche des Pressenrohres 14 abdichtet (Fig. 2) oder aber im Inneren der Kartusche 18 verschiebbar ist (Fig. 1).

In Fig. 3 sind der Pressenkopf 12 und das daran anschließende Ende des Pressenrohres 14 in einem vergrößerten axialen Schnitt gezeigt. Dargestellt ist hier die Konfiguration nach Fig. 1 mit eingesetzter Kartusche 18, speziell in dem Zustand, in dem die Kartusche vollständig geleert ist und somit der Folgekolben 32 der Kartusche sowie auch der presseneigene Folgekolben 34 sich am vorderen Ende der Kartusche 18 befinden.

Wie man in Fig. 3 erkennt, weist der Pressenkopf 12 innerhalb der ringförmigen Dichtfläche 26 eine zylindrische Ausnehmung 26' auf. Eine Bohrung 42 verbindet die Ausnehmung 26' mit einem Zylinder 44, in dem ein Kolben 46 der Hochdruck-Kolbenpumpe 20 verschiebbar ist. Wenn sich der Kolben 46 nach rechts in Fig. 3 bewegt, so wird Fett über die Bohrung 42 und den Anschluss 28 angesaugt. Wenn sich der Kolben nach links über die Bohrung 42 hinweg bewegt, so wird das im Zylinder 44 eingeschlossene Fett unter hohem Druck über ein Rückschlagventil 48 aus dem Anschluss 24 ausgepresst.

Der presseneigene Folgekolben 34 weist eine umlaufende elastische Quetschdichtung 50 auf, die zwischen zwei Scheiben 52, 54 gehalten ist. Die Scheibe 54 ist axial auf einem von der Scheibe 52 ausgehenden Bolzen 56 verschiebbar und liegt in Fig. 3 an einem Bund 58 dieses Bolzens an, so dass der Abstand zwischen den Scheiben 52 und 54 maximal ist und deshalb die Quetschdichtung 50 nur wenig komprimiert wird und einen entsprechend kleinen Außendurchmesser hat, so dass sich der Folgekolben 34 leichtgängig im Inneren der Kartusche 18 verschieben lässt.

Jenseits des Bundes 58 bildet der Bolzen 56 einen Gewindeabschnitt 60 mit kleinerem Durchmesser, der zur Verbindung mit der Kolbenstange 36 dient.

Fig. 4 zeigt die Fettpresse in der Konfiguration nach Fig. 2, also ohne die Kartusche 18 und deren Folgekolben 32. Die Quetschdichtung 50 ist hier stärker zwischen den Scheiben 52 und 54 gequetscht und hat deshalb einen größeren Außendurchmesser, so dass sie an der Innenfläche des Pressenrohres 14 abdichtet. Der Abstand zwischen den Scheiben 52 und 54 lässt sich nach Bedarf einstellen, indem die Kolbenstange 36 um ihre Längsachse gedreht wird, während eine Verdrehsicherung die Scheibe 52 an einem Mitdrehen hindert, so dass der Gewindeabschnitt 60 des Bolzens 56 tiefer in eine entsprechende Gewindebohrung am Ende der Kolbenstange 36 eingeschraubt oder aus dieser herausgeschraubt wird. Die Verdrehsicherung der Scheibe 52 wird dadurch bewirkt, dass die Scheibe mit Hilfe der Kolbenstange 36 ganz gegen den Pressenkopf 12 geschoben und dann gedreht wird, bis am Pressenkopf 12 gebildete Nocken 62 (Fig. 4) in entsprechende Kerben 64 (Fig. 3) in der Scheibe 52 einfallen.

Auf entsprechende Weise kann die Kolbenstange 36 auch ganz von dem Bolzen 56 abgeschraubt werden, um die Konfiguration nach Fig. 1 und 3 herzustellen. Wenn die Fettpresse in der Konfiguration nach Fig. 1 und 3 mit der Kartusche 18 benutzt wird und beim Einführen der Kartusche in das Pressenrohr der presseneigene Folgekolben 34 zum hinteren Ende verschoben wird, so wird die Arbeit mit der Fettpresse nicht durch die Kolbenstange 36 behindert, die sonst sehr weit aus dem hinteren Ende der Fettpresse herausragen würde.

Das beschriebene Ausführungsbeispiel lässt sich auf vielfältige Weise abwandeln.

Beispielsweise braucht die Verbindung zwischen der Kartusche und der Kolbenpumpe 20 nicht wie in Fig. 3 durch eine plane Dichtfläche am Pressenkopf gebildet zu werden. Stattdessen kann an dem Pressenkopf eine ringförmige Dichtung vorgesehen sein, die dadurch, dass die Kartusche von der Feder 30 gegen den Pressenkopf gedrückt wird, am umlaufenden Rand der Kartusche abdichtet. Ebenso ist es denkbar, einen Gewindehals der Kartusche im Presssitz in eine ringförmige Nut oder in die Ausnehmung 26' des Pressenkopfes eingreifen zu lassen.

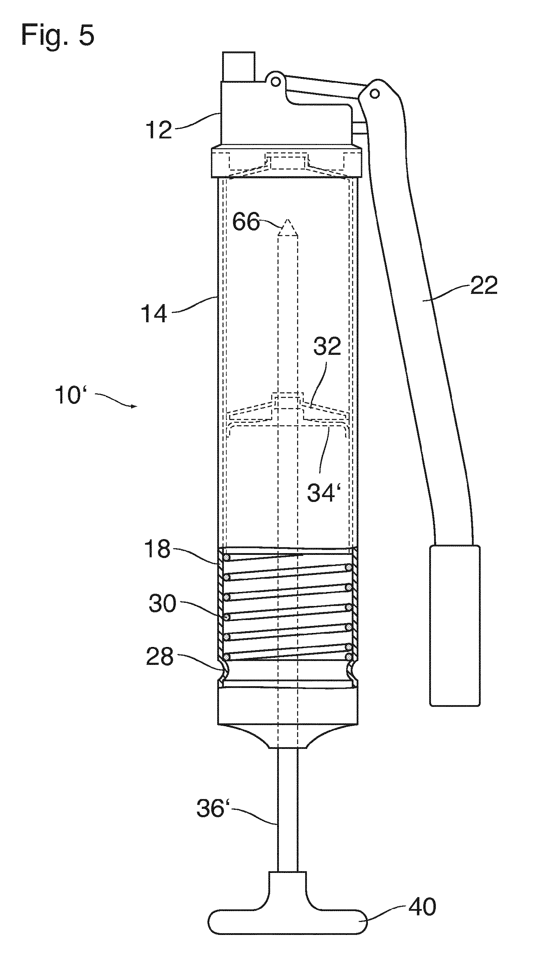

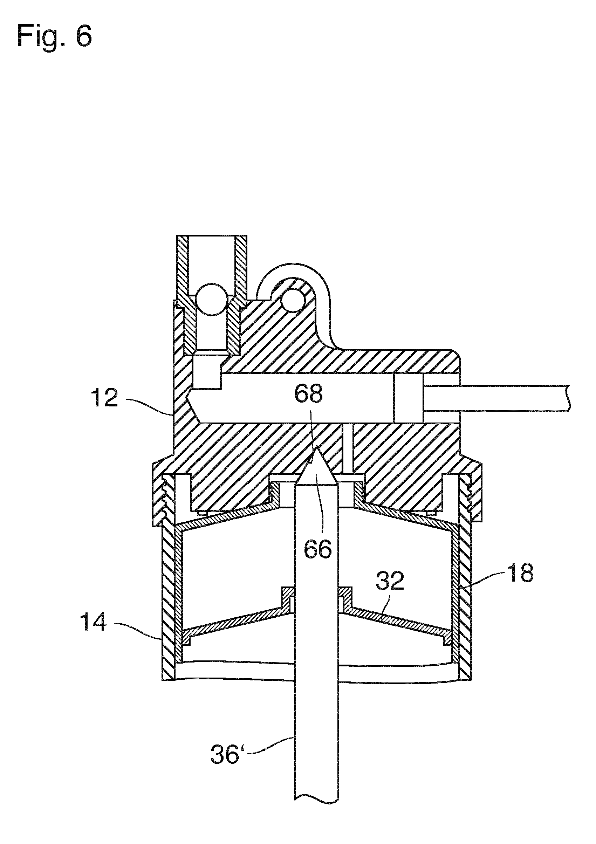

Fig. 5 und 6 zeigen eine Fettpresse 10' gemäß einem anderen Ausführungsbeispiel. Hier braucht in der Konfiguration mit Kartusche 18 keine Kolbenstange ausgebaut zu werden. Stattdessen weist diese Fettpresse eine Kolbenstange 36' mit einer dornartigen Spitze 66 auf, mit der der Folgekolben 32 der Kartusche durchstochen werden kann.

Ein presseneigener Folgekolben 34' ist auf der Kolbenstange 36' verschiebbar. Der presseneigene Folgekolben 34' wird in diesem Fall durch einen elastischen Teller gebildet, dessen Eigenelastizität so groß ist, dass er sich an die unterschiedlichen Innendurchmesser der Kartusche 18 und des Pressenrohres 14 anpassen kann.

Wenn die Kartusche 18 in das Pressenrohr 14 eingeführt wurde und das Pressenrohr mit dem Pressenkopf 12 verschraubt wurde, so wird ein leichter Schlag auf den Handgriff 40 ausgeübt, so dass die Spitze 66 den Folgekolben 32 der Kartusche durchsticht. Bei allen gängigen Kartuschen wird der Folgekolben durch eine verhältnismäßig dünne Scheibe aus Kunststoff gebildet, die sich auf diese Weise perforieren lässt, ohne dass dazu eine Vorschwächung oder Sollbruchstelle im Folgekolben 32 erforderlich ist. Die Kolbenstange 36' wird dann ganz eingefahren, bis die Spitze 66 sich in eine entsprechende Aufnahme 68 im Pressenkopf legt, wie in Fig. 6 gezeigt ist.

## Patentansprüche

1. Fettpresse mit einem Pressenkopf (12), einem lösbar an den Pressenkopf angekuppelten Pressenrohr (14), einem an dem Pressenkopf ausgebildeten Anschluss (28) für eine in dem Pressenrohr (14) aufgenommene Kartusche (18), und einem am Pressenrohr (14) im Bereich seines hinteren, vom Pressenkopf (12) abgewandten Endes ausgebildeten Anschlag (28) zur Abstützung der Kartusche (18), **dadurch gekennzeichnet, dass** zwischen dem Anschlag (28) und dem hinteren Ende der Kartusche (18) eine Feder (30) angeordnet ist, die die Kartusche gegen den Pressenkopf (12) vorspannt.

2. Fettpresse nach Anspruch 1, bei der der Pressenkopf (12) eine ringförmige Dichtfläche (26) aufweist, an der ein offenes vorderes Ende der Kartusche (18) durch die Feder (30) in Anlage gehalten wird.

3. Fettpresse nach Anspruch 1 oder 2, mit einer koaxial im Pressenrohr (14) verlaufenden Kolbenstange (36; 36') und einem im Pressenrohr geführten Folgekolben (34; 34').

4. Fettpresse nach Anspruch 3, bei der die Kolbenstange (36) aus dem Pressenrohr (14) entnehmbar ist.

5. Fettpresse nach Anspruch 4, bei der die Kolbenstange (36) von dem presseneigenen Folgekolben (34) lösbar ist.

6. Fettpresse nach Anspruch 5, bei der der presseneigene Folgekolben (34) eine Dichtung (50) mit verstellbarem Außendurchmesser aufweist.

7. Fettpresse nach Anspruch 3, bei der die Kolbenstange (36') eine Spitze (66) aufweist, die dazu ausgebildet ist, einen scheibenförmigen Folgekolben (32) der Kartusche (18) zu durchstoßen.
